# EUROPEAN PATENT SPECIFICATION

(11) **EP 4 046 894 B1**
(45) Date of publication and mention of the grant of the patent: **02.08.2023**
(21) Application number: 19948984.0
(22) Date of filing: 18.10.2019
(51) Int. Cl.: B62D 15/02, B62D 1/28

(54) **OVERRIDING DETERMINATION METHOD FOR TRAVEL ASSISTANCE DEVICE, AND TRAVEL ASSISTANCE DEVICE**
VORRANGIGKEITSBESTIMMUNGSVERFAHREN FÜR EINE FAHRASSISTENZVORRICHTUNG UND FAHRASSISTENZVORRICHTUNG
PROCÉDÉ DE DÉTERMINATION D'ANNULATION POUR UN DISPOSITIF D'AIDE AU DÉPLACEMENT ET DISPOSITIF D'AIDE AU DÉPLACEMENT

(43) Date of publication of application: 24.08.2022
(73) Proprietor: NISSAN MOTOR Co., Ltd., Yokohama-shi, Kanagawa 221-0023 (JP)
(72) Inventor: NIWA, Yuya, Atsugi-shi, Kanagawa 243-0123 (JP)
(74) Representative: Global IP Europe Patentanwaltskanzlei
(86) International application number: PCT/JP2019/041135
(87) International publication number: WO 2021/075054

(56) References cited:
- WO-A1-2016/104681
- JP-A- 2003 030 793
- JP-A- 2008 018 825
- JP-A- 2016 043 863
- JP-A- 2016 159 781
- JP-A- 2019 107 978
- US-A1- 2002 169 531
- US-A1- 2013 060 413

## Description

### Technical Field

The present invention relates to an override determination method for a driving assist device and a driving assist device.

### Background Art

An invention in which autonomous driving is cancelled when an intervention operation by an occupant is detected during autonomous driving is known from the prior art (Patent Document 1). In the invention disclosed in Patent Document 1, autonomous driving is canceled when an operating torque applied to a steering wheel exceeds a threshold value.

US 2013/060413 A1, on which the preambles of claims 1 and 6 are based, discloses a method comprising: measuring one or more vehicle steering measurements of a vehicle; calculating one or more expected vehicle steering measurements, each calculated expected vehicle steering measurement corresponding to one of the measured vehicle steering measurements; calculating at least one difference between one of the measured vehicle steering measurements and its corresponding calculated expected vehicle steering measurement; measuring a speed of the vehicle; calculating one or more current threshold values based on the measured speed, each of the current threshold values corresponding to one of the measured vehicle steering measurements and its corresponding calculated expected vehicle steering measurement; and deactivating an automatic vehicle control system when one or more of said at least one calculated difference exceeds its corresponding current threshold value.

JP 2016159781 A discloses a vehicle cruise control system that executes automatic driving control based on driving environment information of an environment in which a vehicle travels and the driving information of the vehicle, the system comprising: an override determination unit for determining, during automatic driving control, whether or not an override condition is satisfied for which of a first operation mode and a second operation mode, in the first operation mode coordinated control of the automatic operation and manual operation being executed, in the second operation mode the automatic operation being suspended and the manual operation being permitted; and an operation mode switching unit for switching between the automatic operation, the first operation mode, and the second operation mode according to a determination result of the override determination unit.

### Prior Art Documents

### Patent Documents

Patent Document 1: Japanese Laid Open Patent Application No. 2007-326453

### Summary of the Invention

### Problem to be Solved by the Invention

However, the invention disclosed in Patent Document 1 does not take into consideration the steering angle of the steering wheel. It is necessary to change the determination threshold for the intervention operation depending on the steering angle, but this is not taken into consideration. For this reason, in the invention disclosed in Patent Document 1, there is the risk of an erroneous determination that an override has occurred, even though an intervention operation (override) by the occupant has not occurred.

In view of the problem described above, an object of the present invention is to provide an override determination method for a driving assist device that can prevent erroneous determination of an override by using a steering angle, and a driving assist device.

### Means to Solve the Problem

An override determination method for a driving assist device according to one aspect of the present invention comprises acquiring a first motor current for canceling out a self-aligning torque generated in tires mounted on a vehicle while executing driving assist control, using the first motor current to set a first threshold value that is greater than the first motor current and increases as the steering angle detected by the sensor increases, and determining that an override has occurred when a second motor current for controlling a turning angle of the tires in accordance with a steering angle detected by the sensor is greater than the first threshold value.

### Effects of the Invention

By means of the present invention, erroneous determination of an override can be prevented.

### Brief Description of the Drawings

Figure 1 is a block diagram showing an architecture for autonomous driving according to an embodiment of the present invention.
Figure 2 is a block diagram showing an architecture for autonomous driving according to the embodiment of the present invention.
Figure 3 is a diagram illustrating a steer-by-wire system according to the embodiment of the present invention.
Figure 4 is a graph illustrating the relationship between a steering angle of a steering wheel and a motor current.
Figure 5 is a graph illustrating the relationship between the steering angle of the steering wheel and the motor current.
Figure 6 is a graph illustrating the relationship between the steering angle of the steering wheel and the motor current.
Figure 7 is a graph illustrating the relationship between the steering angle of the steering wheel and the motor current.
Figure 8 is a graph illustrating the relationship between the steering angle of the steering wheel and the motor current.
Figure 9 is a flow chart illustrating an example of an operation of the driving assist device according to the embodiment of the present invention.
Figure 10 is a flow chart illustrating an example of an operation of the driving assist device according to the embodiment of the present invention.

### Embodiments for Implementing the Invention

Embodiments of the present invention are described below with reference to the drawings. In the descriptions of the drawings, identical parts have been assigned the same reference numerals, and the descriptions thereof have been omitted.

### (Architecture of Autonomous Driving)

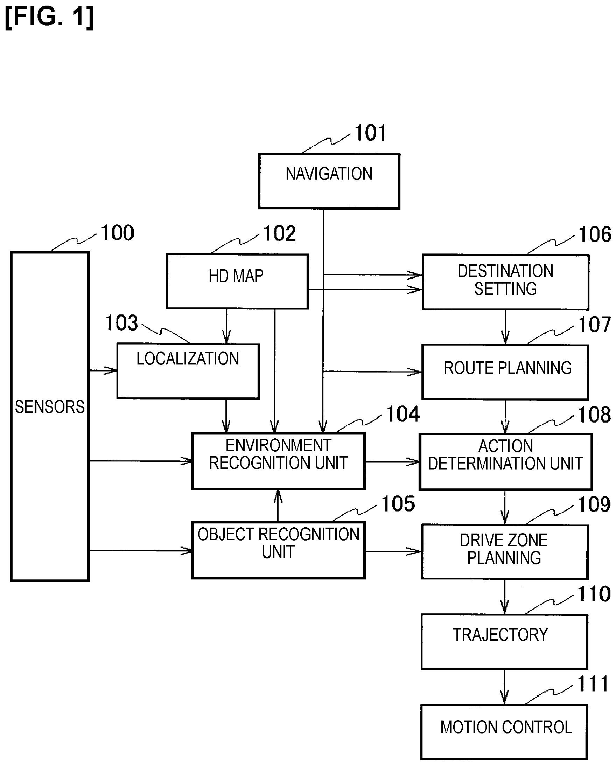

The driving assist device according to the present embodiment is used in vehicles having an autonomous driving function. An architecture of the autonomous driving according to the present embodiment will be described with reference to Figure 1. In the present embodiment, the autonomous driving function includes at least driving assist controls, such as adaptive cruise control (ACC), which controls the inter-vehicular space, and a lane keeping assist system (LKAS), which prevents lane deviation.

When carrying out autonomous driving, ascertaining one's own location and ascertaining information on the surroundings of the vehicle are required. With these ascertainments, it becomes possible for the vehicle to automatically change lanes and to proceed in the appropriate direction at an intersection, to thereby reach the destination. The architecture for ascertaining the self-location and the architecture for ascertaining the information on the vehicle surroundings are indicated by the reference symbols 100-105 in Figure 1.

Sensors indicated by the reference symbol 100 in Figure 1 detect various pieces of information. These sensors 100 are mounted on a vehicle. The sensors 100 include a laser range finder that measures distance using light waves, a radar, a LiDAR, a camera that acquires still images and moving images, a sonar that measures distance using ultrasonic waves, and the like. The sensors also include a speed sensor that detects the speed of the vehicle, an acceleration sensor that detects the acceleration of the vehicle, a steering angle sensor that detects the steering angle of the vehicle, a gyro sensor, and the like.

More specifically, a plurality of cameras are provided, in the front, side, rear, the side-view mirrors, and the like, of the vehicle. The camera comprises an imaging element, such as a CCD (charge-coupled device), CMOS (complementary metal oxide semiconductor), and the like. The camera detects objects present in the vehicle surroundings (pedestrians, bicycles, two-wheeled vehicles, other vehicles, and the like) as well as information on the vehicle surroundings (road boundary lines, traffic lights, signs, pedestrian crossings, intersections, and the like).

The radar emits radio waves toward an object in front of the vehicle and measures the reflected waves, thereby measuring the distance and direction to the object. LIDAR (Laser Imaging Detection and Ranging) carries out scanning by means of laser light in the horizontal direction as well as the vertical direction, to thereby measure the position and shape of objects present in the vehicle surroundings.

In addition, a GPS receiver may be included in the sensors 100. The GPS receiver receives radio waves from a satellite to thereby detect position information about a vehicle on the ground (including latitude and longitude information). However, the method for detecting the vehicle's position information is not limited to a GPS receiver. For example, the position may be estimated using a method called odometry. Odometry is a method for estimating the vehicle position by calculating the amount and direction of movement of the vehicle in accordance with the rotation angle and the rotational angular velocity of the vehicle.

The information detected by the sensors 100 is transmitted to a controller (not shown) mounted on the vehicle and processed. An example of the controller is a general-purpose microcomputer equipped with a CPU (central processing device), memory, and an input/output unit. A computer program is installed in the microcomputer to cause it to function as the driving assist device. By executing the computer program, the microcomputer functions as a plurality of information processing circuits included in the driving assist device. Here, an example is shown in which the plurality of information processing circuits included in the driving assist device is realized by software, but the information processing circuits can of course comprise dedicated hardware for executing each of the information processes shown below.

Such a controller also includes an ECU (Electronic Control Unit). Normally, a plurality of ECUs are provided in a vehicle. In addition to travel control of the vehicle, ECUs are also used for controlling the stereo, air conditioner, and the like.

The information detected by the sensors 100 is localized to fit the detected region (reference symbol 103 in Figure 1).

The information detected by the sensors 100 and map information are merged, and an environment recognition unit 104 in the controller generates a world model. The world model here means information on the surrounding environment on a digital map that combines static map information and a high-precision map with dynamic position information, such as self-location information, other vehicle information, pedestrian information, and the like.

The high-precision map will be described. A high-precision map contains road information, such as the number of lanes of a road, road width information, information on road undulations, and the like, and information such as road signs indicating the speed limit, one-way streets, and the like, road markings, such as pedestrian crossings, partition lines, and the like. Furthermore, the high-precision map may include facility information such as road structures (for example, traffic lights, telephone poles) and buildings. These pieces of high-precision map information are provided in an HD map 102 shown in Figure 1. The environment recognition unit 104 reads a high-precision map of the self-location and the surroundings of the self-location from the HD map 102 and sets, on the map that has been read, dynamic position information such as the self-location information, other vehicle information, and pedestrian information to thereby generate a world model.

Various data, such as road information and facility information, are not necessarily limited to data acquired from the HD map 102, and may be acquired using vehicle-to-vehicle communication or road-to-vehicle communication. If various data such as road information and facility information are stored in an externally installed server, the controller may acquire these data from the cloud at any time by communication. In addition, the controller may periodically acquire the latest map information from an externally installed server and update the map information being held in the controller.

An object recognition unit 105 in the controller generates recognition information about objects around the vehicle, which is generated based on information detected by the sensors 100, and generates a local model. The local model includes, as the object recognition information, other vehicle information, pedestrian information, and the like. The other vehicle information includes speeds, traveling directions, travel lanes, and the like, of other vehicles. The pedestrian information includes attributes (adult or child), orientations of faces, directions of travel, and the like, of pedestrians. The local model generated by the object recognition unit 105 is used for generating the world model.

A travel control architecture for autonomous driving will be described next with reference to reference symbols 106-111 in Figure 1.

The user sets a destination using a navigation device 101 (Navigation) (reference symbol 106 in Figure 1, Destination setting). The navigation device 101 reads the HD map 102 and plans a route to reach the destination. If an intersection is present along the route for reaching the destination, the timing for changing the lane to a lane entering the intersection is also planned (reference symbol 107 in Figure 1, Route planning).

An action determination unit 108 in the controller determines the action to be taken when traveling autonomously along a route that is set using the information generated by the environment recognition unit 104 and the object recognition unit 105. In addition, the action determination unit 108 determines whether to advance or stop the host vehicle. For example, the vehicle is stopped if the traffic light is red and the vehicle is driven if the traffic light is green. In addition, the action determination unit 108 determines the timing for operating a turn signal and the timing for operating the steering wheel when changing lanes.

Next, the controller reads the HD map 102 and the local model generated by the object recognition unit 105, and plans a drive zone (reference symbol 109 in Figure 1, Drive Zone Planning). A drive zone is defined as a region in which the vehicle can travel. While traveling, various obstacles (other vehicles, motorcycles, fallen objects on the road, etc.) are detected by the sensors 100. The controller plans a drive zone in consideration of these obstacles.

The controller then sets a trajectory along the drive zone (reference symbol 110 in Figure 1). A trajectory is formed by connecting a plurality of points indicating the travel trajectory of a vehicle, and each point is composed of position information about the vehicle, and attitude information about the vehicle at that position. The attitude information includes the attitude angle. The controller also generates a vehicle speed profile for traveling along the trajectory in accordance with the generation of the trajectory. In general, from the viewpoint of discomfort to the occupant and the limit behavior of the vehicle, the vehicle speed can be set higher as the curvature radius of the trajectory increases. The controller may set the vehicle speed profile based on the curvature radius of the trajectory, or, conversely, generate the trajectory based on the vehicle speed profile.

The controller then controls the attitude of the vehicle to drive the vehicle along the trajectory at an appropriate attitude (reference symbol 111 in Figure 1, motion control).

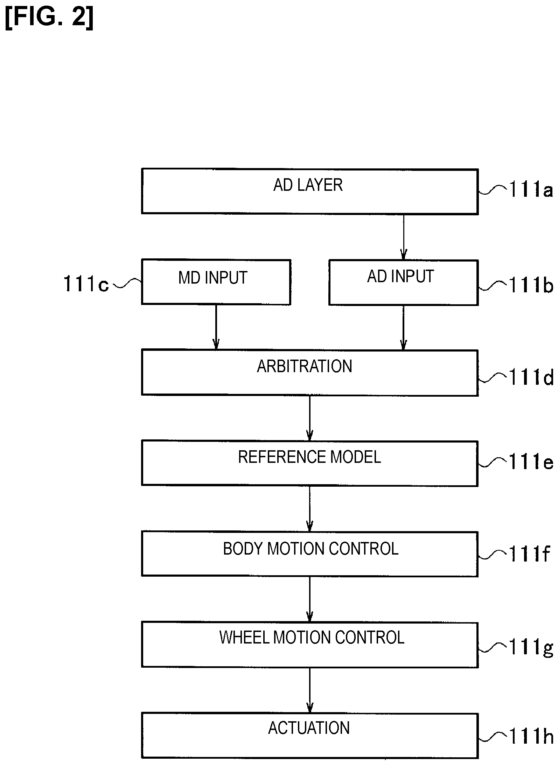

Details of a motion control 111 will be described with reference to Figure 2.

An AD (Autonomous Driving) layer 111a shown in Figure 2 is a layer constituting the autonomous driving function. Specifically, the AD layer 111a is a layer formed by the reference symbols 100-110 shown in Figure 1.

Information used for autonomous driving is input from the AD layer 111a to an arbitration 111d (AD input 111b). Information relating to the occupant's voluntary driving operation is also input to the arbitration 111d (MD input 111c). Information relating to the occupant's voluntary driving operation include the occupant's operations of the steering wheel, the accelerator pedal, and the brake pedal.

If an intervention operation by an occupant is carried out during autonomous driving, the autonomous driving is switched to manual driving. Switching from autonomous driving to manual driving is called override. The arbitration 111d monitors the AD input 111b and the MD input 111c and switches from autonomous driving to manual driving, or conducts arbitration such that a process related to the autonomous driving does not conflict with a process related to the manual driving. Override has been described as switching from autonomous driving to manual driving above, but is not limited to this. Override may be defined as the occupant's intervention operation itself during autonomous driving.

Switching from autonomous driving to manual driving (override) means that all driving authority is transferred, usually to the occupant. However, in the present embodiment, an override does not necessarily mean that all driving authority is transferred to the occupant. For example, if the occupant's intervention operation is a slight operation, it cannot be definitively determined that the occupant's intention is to request transfer of all driving authority. Thus, if the occupant's intervention operation is detected during autonomous driving (if it is determined that an override has occurred), the arbitration 111d calculates an override amount indicating the proportion of the occupant's intervention operation. Then, the arbitration 111d conducts arbitration such that a process related to the autonomous driving does not conflict with a process related to the manual driving based on the calculated override amount.

A reference model 111e is a function for calculating the attitude of the vehicle (particularly the attitude when turning). The reference model 111e calculates the yaw moment, yaw rate, and slip angle. Specifically, the reference model 111e acquires the curvature of the road on which the vehicle will travel in the future. The curvature is acquired using a camera image, for example. A curve in front of the vehicle obtained from the camera image may be approximated to an arc, and the reciprocal of the radius of this arc may be used as the curvature. In general, curvature is defined as the reciprocal of the curvature radius. The reference model 111e uses the vehicle speed, the lateral force generated in the vehicle (lateral positional displacement), and attitude angle, and the like to thereby calculate the yaw moment, yaw rate, and slip angle for appropriately traveling on a curve.

A body motion control 111f executes a feedback control so as to be able to obtain the yaw moment, yaw rate, and slip angle calculated by the reference model 111e. A wheel motion control 111g outputs a turn control command to an ECU that controls the front wheels and the rear wheels so as to be able to obtain the yaw moment, yaw rate, and slip angle calculated by the reference model 111e.

Finally, the controller controls various actuators (accelerator pedal actuator, brake actuator, steering actuator) (reference symbol 111h in Figure 2, Actuation). As a result, autonomous driving that seldom causes discomfort to the occupant is realized.

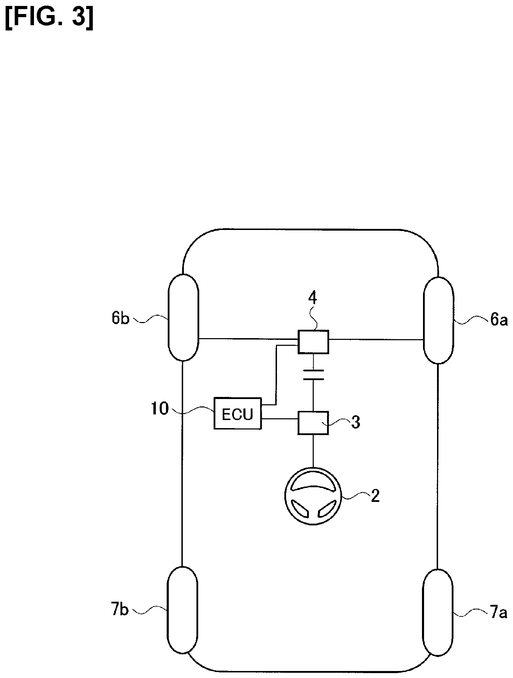

Next, a steering wheel mechanism mounted on a vehicle will be described with reference to Figure 3.

A steer-by-wire system is applied as the steering wheel mechanism in the present embodiment. As shown in Figure 3, in the steer-by-wire system a steering wheel 2 and the turning wheels 6a, 6b (front wheels) are mechanically separated. A turning actuator 4 turns the turning wheels 6a, 6b, which are mechanically separated from the steering wheel 2. 7a, 7b may be used as the turning wheels instead of 6a, 6b.

In the steer-by-wire system, the steering angle of the steering wheel 2 is detected by a steering angle sensor (not shown). The steering angle detected by the steering angle sensor is output to the ECU 10. The ECU 10 calculates the turning angle of the turning wheels 6a, 6b based on the steering angle detected by the steering angle sensor. The ECU 10 supplies a motor current to the turning actuator 4, thereby driving the turning actuator 4, such that the turning angle becomes the calculated turning angle. For example, a DC brushless motor can be used as the turning actuator 4. By means of the steer-by-wire system, design flexibility such as the arrangement of various devices (such as the steering wheel 2) increases, which may contribute to size reduction.

In autonomous driving, since the occupant does not operate the steering wheel 2 the operation of the steer-by-wire system is as follows. The ECU 10 supplies a motor current to the turning actuator 4, thereby driving the turning actuator 4, in accordance with a command from the wheel motion control 111g (refer to Figure 2). In autonomous driving, the wheel motion control 111g calculates the turning angle of the turning wheels 6a, 6b. In both autonomous driving and manual driving, motor current for controlling the turning wheels 6a, 6b is supplied to the turning actuator 4.

In autonomous driving in which the steer-by-wire system is employed, it is not essential to rotate the steering wheel 2 in accordance with the turning of the turning wheels 6a, 6b. However, it is preferable to rotate the steering wheel 2 in accordance with the turning of the turning wheels 6a, 6b. If the steering wheel 2 does not rotate even though the turning wheels 6a, 6b are turning, the occupant may feel a sense of discomfort. Thus, the ECU 10 controls a steering actuator 3 in accordance with the turning of the turning wheels 6a, 6b, thereby rotating the steering wheel 2. The occupant's discomfort is thereby reduced. The ECU 10 is one of a plurality of ECUs provided in the vehicle.

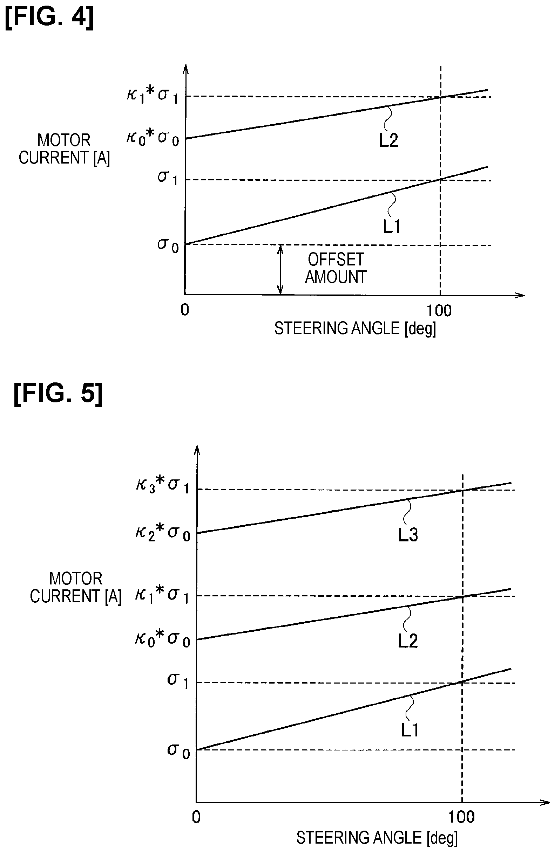

One example of an override determination method will be described next with reference to Figure 4. The vertical axis of Figure 4 indicates the motor current supplied to the turning actuator 4. The horizontal axis of Figure 4 indicates the steering angle of the steering wheel 2. The horizontal axis of Figure 4 may be a pinion angle.

The straight line L1 shown in Figure 4 indicates the transition of the motor current at the time of automatic turning. Automatic turning is a scenario in which the vehicle automatically turns a curve, for example. As can be understood from the straight line L1, the motor current increases as the steering angle increases. This is to cancel out the self-aligning torque that is generated when traveling along a curve. Self-aligning torque is the moment around the vertical axis from among the moments generated when the tires skid, and is also called a restoring torque. Self-aligning torque is generated when the tires skid, and thus is generated regardless of autonomous driving or manual driving. Because self-aligning torque is a force that attempts to return the steering angle to zero (neutral position), during manual driving, the occupant operates the steering wheel 2 in a direction for canceling out the self-aligning torque (the turning direction). In autonomous driving, the controller supplies a motor current for canceling out the self-aligning torque, in order to make the desired turn.

The self-aligning torque increases as the steering angle increases. Thus, the controller increases the motor current for canceling out the self-aligning torque as the steering angle increases.

σ₀ in Figure 4 indicates the offset amount of the motor current. Even if the steering angle of the steering wheel 2 is zero, that is, even when traveling straight, a constant motor current is supplied to the turning actuator 4. The offset amount is the current supplied to the turning actuator 4 that controls the turning angle of the turning wheels 6a, 6b when the steering angle of the steering wheel 2 is zero. σ₁ in Figure 4 is the motor current supplied to the turning actuator 4 when the steering angle of the steering wheel 2 is 100 degrees. σ₁ is the motor current for canceling out the self-aligning torque that is generated when the steering angle is 100 degrees. σ₀ and σ₁ are eigenvalues determined in accordance with the mechanism of the steer-by-wire system. The controller acquires σ₀ and σ₁ in advance, based on the mechanism of the steer-by-wire system.

A straight line L2 shown in Figure 4 is a threshold value used for determining an override (hereinafter referred to as threshold L2). In the present embodiment, the controller uses the straight line L1 to set the threshold L2. One example of a method for setting the threshold L2 will be described. The controller sets a value (κ₀ × σ₀) obtained by multiplying σ₀ by a coefficient κ₀ as the threshold value when the steering angle is zero. In addition, the controller sets a value (κ₁ × σ₁) obtained by multiplying σ₁ by a coefficient κ₁ as the threshold value when the steering angle is 100 degrees. The coefficient κ₀ is larger than the coefficient κ₁ (κ₀ > κ₁). The controller connects a value (κ₀ × σ₀) obtained by multiplying σ₀ by the coefficient κ₀ and a value (κ₁ × σ₁) obtained by multiplying σ₁ by the coefficient κ₁ to thereby set the threshold L2. The coefficient κ₁ may be larger than the coefficient κ₀.

In automatic turning, there are cases when the occupant intervenes. The occupant's intervention operation referred to here means that the occupant operates the steering wheel 2 during automatic turning. If the occupant operates the steering wheel 2 during automatic turning, motor current corresponding to the steering angle related to the occupant's operation is supplied to the turning actuator 4. Motor current corresponding to the steering angle related to the occupant's operation is a current for controlling the turning angle of the turning wheels 6a, 6b. The controller detects the motor current during automatic turning and determines whether the detected motor current is greater than the threshold L2. If the detected motor current is greater than the threshold L2, the controller determines that an occupant's intervention operation has occurred, that is, that an override has occurred.

The determination mechanism will now be described. The motor current when the occupant operates the steering wheel 2 is larger than the motor current during autonomous driving. The mechanism by which motor current is supplied to the turning actuator 4 by means of the operation of the steering wheel 2 by the occupant in a steer-by-wire system has already been described. In the present embodiment, the threshold L2 is set as a value larger than the motor current during autonomous driving. For this reason, without the occupant's intervention operation during automatic turning, the motor current during automatic turning usually does not exceed the threshold L2. Accordingly, if the motor current exceeds the threshold L2, it means that the occupant's intervention operation has likely occurred, that is, that an override has likely occurred. Thus, if the detected motor current is greater than the threshold L2, the controller determines that and override has occurred. By using the threshold L2, erroneous determination of an override can be prevented. Erroneous determination referred to here means a case in which an operation of the steering wheel 2 carried out automatically is erroneously determined to be an operation by the occupant.

The advantages attributable to the coefficient κ₀ being different from the coefficient κ₁ will be described next. Previously it was stated that σ₀ and σ₁ are eigenvalues determined in accordance with the mechanism of the steer-by-wire system. By combining such eigenvalues and coefficients having different values depending on the steering angle, the setting flexibility of the threshold L2 increases. As a result, it is possible to set a threshold value in consideration of the individual occupant's operation.

In addition, the coefficient κ₁ is set smaller than the coefficient κ₀. As a result, the determination sensitivity is enhanced in regions where the steering angle is large. If the coefficient κ₁ is greater than the coefficient κ₀, it is possible that the motor current will not exceed a threshold L2 even if the occupant operates the steering wheel 2 significantly. By setting the coefficient κ₁ to be smaller than the coefficient κ₀, such possibility can be eliminated.

The override amount (hereinafter appropriately referred to as OD amount) will be described next with reference to Figures 5-8. The vertical and horizontal axes, etc., of Figures 5-8 are the same as those of Figure 4. The straight line L1 and threshold L2 of Figures 5-8 are also the same as those of Figure 4.

In Figure 4, it was described that if the motor current is greater than the threshold L2, the controller determines that an override has occurred. Even if an override has occurred, the proportion of the occupant's intervention operation varies. In the present embodiment, the proportion of the occupant's intervention operation is defined as the override amount. The override amount is represented by a standardized value between 0 and 1. An override amount of 0 is defined as when the occupant is not intervening in the driving, that is, that the system is executing all of the driving. An override amount of 1 is defined as when all driving authority has been transferred to the occupant, and the occupant is executing all of the driving. An override amount of greater than 0 and less than 1 (0 < OD amount < 1) is defined as execution of a portion of the driving by the occupant, with the remainder being executed by the system. An increase in the override amount (as the override amount approaches 1) indicates an increase in the proportion executed by the occupant.

A straight line L3 shown in Figure 5 is a threshold value used for calculating the override amount (hereinafter referred to as threshold L3). In the present embodiment, the controller uses the straight line L1 to set the threshold L3. One example of a method for setting the threshold L3 will be described. The controller sets a value (κ₂ × σ₀) obtained by multiplying σ₀ by a coefficient κ₂ as the threshold value when the steering angle is zero. In addition, the controller sets a value (κ₃ × σ₁) obtained by multiplying σ₁ by a coefficient κ₃ as the threshold value when the steering angle is 100 degrees. The coefficient κ₂ is larger than the coefficient κ₃ (κ₂ > κ₃). The controller connects a value (κ₂ × σ₀) obtained by multiplying σ₀ by the coefficient κ₂ and a value (κ₃ × σ₁) obtained by multiplying σ₁ by the coefficient κ₃ to thereby set the threshold L3. The coefficient κ₂ may be larger than the coefficient κ₃.

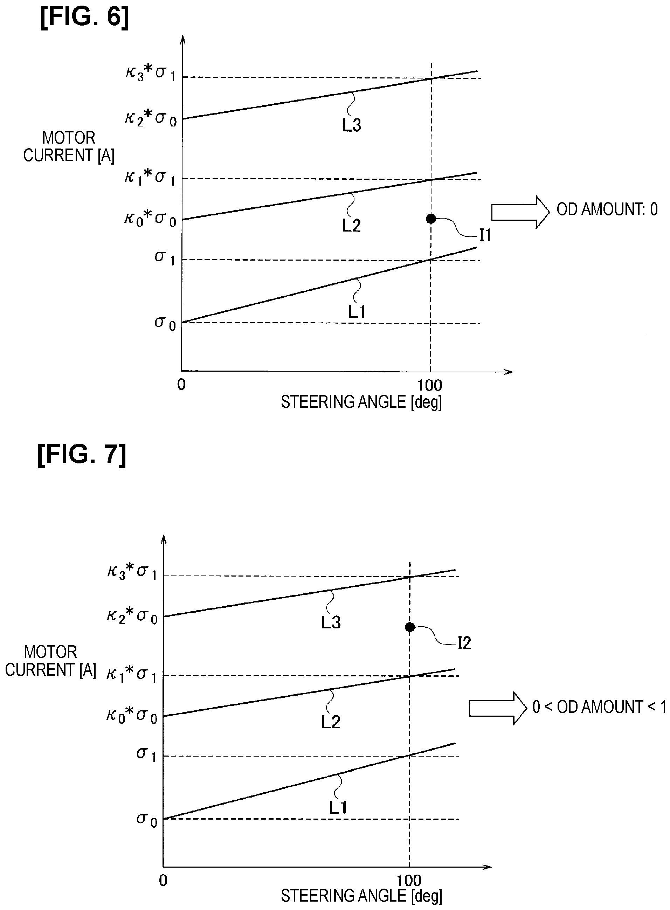

As shown in Figure 6, if a motor current I1 detected when the steering angle is 100 degrees is less than or equal to the threshold value L2, the controller determines that the override amount is zero. In addition, at this time, the controller determines that an override has not occurred.

On the other hand, as shown in Figure 7, if a motor current I2 detected when the steering angle is 100 degrees is between the threshold value L2 and the threshold value L3, the controller calculates the override amount that is greater than 0 and less than 1, in accordance with the magnitude of the motor current I2. The closer the motor current I2 is to the threshold value L3, the closer the override amount is to one. On the other hand, the closer the motor current I2 is to the threshold value L2, the closer the override amount is to zero. In addition, at this time, the controller determines that an override has occurred.

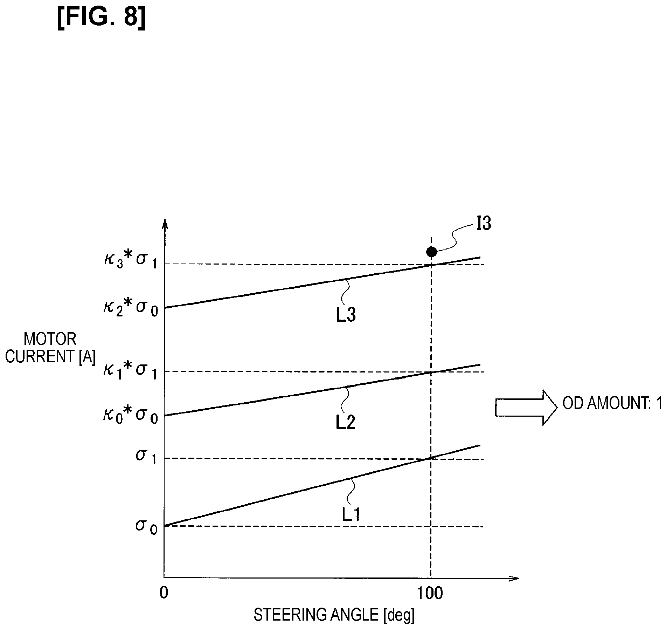

In addition, as shown in Figure 8, if a detected motor current I3 is greater than the threshold value L3, the controller calculates the override amount to be one. In addition, the controller determines that an override has occurred.

In Figures 4-8, L1, L2, and L3 are described as straight lines, but the present invention is not limited thereto. L1, L2, and L3 may be curves. In addition, L1, L2, and L3 may be shapes having a prescribed width.

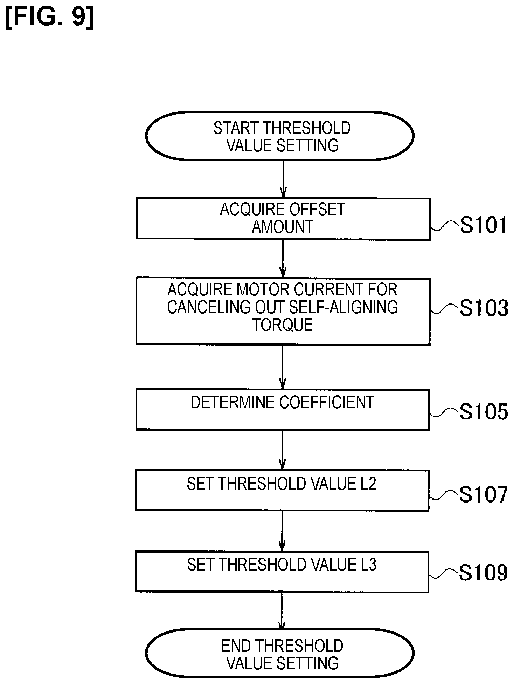

One example of a method for setting the threshold values will be described next with reference to the flow chart of Figure 9.

In Step S101, the controller acquires an offset amount (σ₀) of the motor current. The offset amount is the current supplied to the turning actuator 4 that controls the turning angle of the turning wheels 6a, 6b when the steering angle of the steering wheel 2 is zero (refer to Figure 4).

The process proceeds to Step S103, and the controller acquires a motor current (σ₁) for canceling out the self-aligning torque (refer to Figure 4). σ₁ is the motor current for canceling out the self-aligning torque that is generated when the steering angle is 100 degrees. The controller connects σ₀ and σ₁, thereby generating the straight line L1 (refer to Figure 4). As described above, the motor current (σ₁) and the offset amount (σ₀) are eigenvalues determined in accordance with the mechanism of the steer-by-wire system.

The process proceeds to Step S105, and the controller determines the coefficients κ₀, κ₁ for setting the threshold value L2 used for the override determination (refer to Figure 4).

The process proceeds to Step S107, and the controller sets a value (κ₀ × σ₀) obtained by multiplying σ₀ by a coefficient κ₀ as the threshold value when the steering angle is zero. In addition, the controller sets a value (κ₁ × σ₁) obtained by multiplying σ₁ by a coefficient κ₁ as the threshold value when the steering angle is 100 degrees. The controller connects a value (κ₀ × σ₀) obtained by multiplying σ₀ by the coefficient κ₀ and a value (κ₁ × σ₁) obtained by multiplying σ₁ by the coefficient κ₁ to thereby set the threshold L2 (refer to Figure 4). The threshold value L2 is a threshold value used for the override determination.

The process proceeds to Step S109, and the controller sets a value (κ₂ × σ₀) obtained by multiplying σ₀ by a coefficient κ₂ as the threshold value when the steering angle is zero. In addition, the controller sets a value (κ₃ × σ₁) obtained by multiplying σ₁ by a coefficient κ₃ as the threshold value when the steering angle is 100 degrees. The controller connects a value (κ₂ × σ₀) obtained by multiplying σ₀ by the coefficient κ₂ and a value (κ₃ × σ₁) obtained by multiplying σ₁ by the coefficient κ₃ to thereby set the threshold L3 (refer to Figure 5). The threshold value L3 is a threshold value used for the override determination.

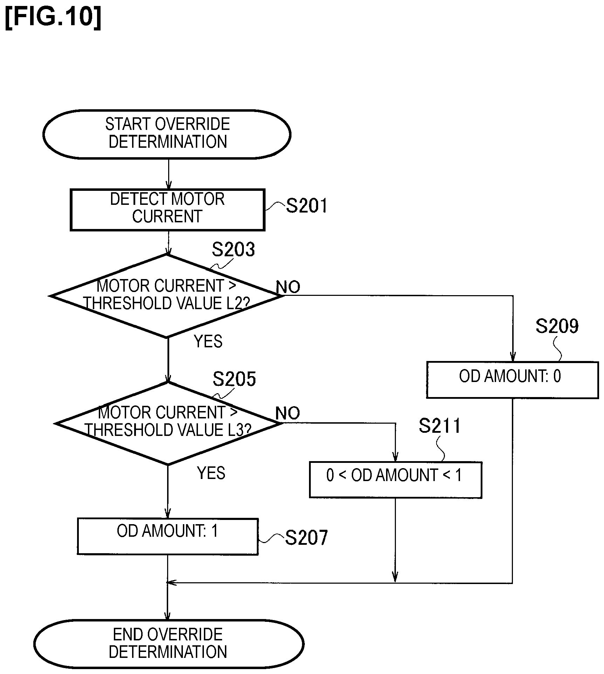

One example of an override determination method will be described next with reference to the flow chart of Figure 10.

In Step S201, the controller detects the motor current supplied to the turning actuator 4 during automatic turning.

If the motor current I1 detected in Step S201 is less than or equal to the threshold value L2 (NO in Step S203), the controller determines the override amount to be 0 (Step S209). In addition, at this time, the controller determines that an override has not occurred (refer to Figure 6). If the detected motor current is greater than the threshold value L2 (YES in Step S203), the process proceeds to Step S205.

If the detected motor current I2 is between the threshold value L2 and the threshold value L3 (NO in Step S205), the controller calculates the override amount that is greater than 0 and less than 1, in accordance with the magnitude of the motor current I2 (step S211). The closer the motor current I2 is to the threshold value L3, the closer the override amount is to one. On the other hand, the closer the motor current I2 is to the threshold value L2, the closer the override amount is to zero. In addition, at this time, the controller determines that an override has occurred (refer to Figure 7).

If the detected motor current I3 is greater than the threshold value L3 (YES in Step S205), the controller determines the override amount to be 1 (Step S207). In addition, at this time, the controller determines that an override has occurred (refer to Figure 8).

### (Action and Effects)

As described above, the following actions and effects can be achieved by means of the driving assist device according to the present embodiment.

The driving assist device comprises a steering angle sensor that detects the steering angle of the steering wheel 2 installed in a vehicle and a controller that determines an occupant's override with respect to driving assist control that is being executed in the vehicle based on the steering angle detected by the steering angle sensor. The controller acquires a motor current (first motor current) for canceling out the self-aligning torque generated in tires (refer to Figure 3) mounted on the vehicle during execution of the driving assist control. The first motor current is supplied to the turning actuator 4, for example. The controller uses the first motor current (straight line L1) to thereby set the threshold value L2 (first threshold value) that is larger than the first motor current (refer to Figure 4). If the motor current (second motor current) for controlling the turning angle of the tires in accordance with the steering angle is greater than the threshold value L2, the controller determines that an override has occurred.

As described above, the self-aligning torque increases as the steering angle increases. For this reason, if a determination threshold for an override is set without using the steering angle, an operation of the steering wheel 2 carried out automatically may be erroneously determined as an occupant's operation. However, in the present embodiment, the controller sets the threshold value L2 in accordance with the magnitude of the steering angle to thereby determine the override. The determination accuracy of the override is thereby improved. In other words, erroneous determination of the override can be prevented.

As shown in Figure 4, the threshold value L2 increases as the steering angle increases. By using the threshold L2, erroneous determination of an override can be prevented.

The threshold value L2 is set by adding an offset value of the current supplied to the turning actuator 4 when the steering angle of the steering wheel 2 is zero (refer to Figure 4). Even if the steering angle of the steering wheel 2 is zero, that is, even when traveling straight, a constant motor current is supplied to the turning actuator 4. By means of the threshold value L2 set using such an offset amount (σ₀), the override determination accuracy is improved.

The controller sets a threshold value L3 (second threshold value) that is greater than the threshold value L2 (refer to Figure 5). If the second motor current is greater than the threshold value L2 and smaller than the threshold value L3, the controller calculates the override amount indicating the proportion of the occupant's intervention operation during automatic traveling, in accordance with the magnitude of the second motor current. In addition, if the second motor current is greater than the threshold value L3, the controller calculates the override amount to be one. The override amount being one means that the driving authority has been transferred to the occupant. By means of the present embodiment, because the override determination accuracy is improved, the calculation accuracy of the override amount is also improved. By executing driving assist based on the override amount, it is possible to execute appropriate driving assist in accordance with the occupant's intention.

If the second motor current is greater than the threshold value L3, the controller may make the override amount larger than when the second motor current is smaller than the threshold value L3. As described above, if the second motor current is greater than the threshold value L2 and smaller than the threshold value L3, the override amount is calculated as a value that is greater than 0 and less than 1 (at this stage, this value is referred to as a first override amount). When the second motor current is greater than the threshold value L3, the controller makes the override amount larger than when the second motor current is smaller than the threshold value L3, which means that the override amount is calculated to be larger than the first override amount.

The coefficient for setting the threshold value L2 differs depending on the magnitude of the steering angle. Specifically, when the steering angle is zero, the controller sets a value (κ₀ × σ₀) obtained by multiplying σ₀ by a coefficient κ₀ as the threshold value. When the steering angle is 100 degrees, the controller sets a value (κ₁ × σ₁) obtained by multiplying σ₁ by a coefficient κ₁ as the threshold value. σ₀ and σ₁ are eigenvalues determined in accordance with the mechanism of the steer-by-wire system. By combining such eigenvalues and coefficients having different values depending on the steering angle, the setting flexibility of the threshold L2 increases. As a result, it is possible to set a threshold value in consideration of the individual occupant's operation.

In the present embodiment, a steer-by-wire system is employed. In the steer-by-wire system, the steering wheel 2 and the turning wheels 6a, 6b (front wheels) are mechanically separated.

Each of the functions described in the embodiments above may be implemented by means of one or more processing circuits. The processing circuits include programmed processing devices, such as processing devices including electrical circuits. In addition, the processing circuits include devices such as circuit components and application-specific integrated circuits (ASIC) implemented to execute the described functions.

Embodiments of the present invention have been described above, but the descriptions and figures that form part of this disclosure should not be understood as limiting the present invention as long as not departing from the scope of the present invention as defined by the appended claim 1.

In the above-described embodiment, a steer-by-wire system was described but the present invention is not limited thereto. For example, the present invention can be applied to an electric power steering system (EPS).

### Descriptions of the Reference Symbols

- 2: Steering wheel
- 3: Steering actuator
- 4: Turning actuator
- 6a, 6b: Turning wheels
- 100: Sensors
- 101: Navigation
- 102: HD map
- 104: Environment recognition unit
- 105: Object recognition unit
- 106: Destination setting
- 107: Route planning
- 108: Action determination unit
- 109: Drive zone planning
- 110: Trajectory
- 111: Motion control
- 111a: AD layer
- 111b: AD input
- 111c: MD input
- 111d: Arbitration
- 111e: Reference model
- 111f: Body motion control
- 111g: Wheel motion control
- 111h: Actuation

## Claims

1. An override determination method using a driving assist device including a sensor that detects a steering angle of a steering wheel installed in a vehicle and a controller that determines an override by an occupant of the vehicle with respect to a driving assist control that is being executed in the vehicle,
**characterized by**
the controller
acquiring (S103) a first motor current for canceling out a self-aligning torque generated in tires mounted on the vehicle during execution of the driving assist control,
using (S107) the first motor current to thereby set a first threshold value (L2) that is larger than the first motor current and increases as the steering angle detected by the sensor increases, and
determining (S203 to S211) that the override has occurred when a second motor current for controlling a turning angle of the tires in accordance with the steering angle detected by the sensor is greater than the first threshold value.

2. The override determination method for a driving assist device according to claim 1, wherein
the controller adds (S107) an offset amount of a current supplied to a motor that controls the turning angle of the tires to thereby set the first threshold value (L2) when the steering angle is zero.

3. The override determination method for a driving assist device according to claim 1 or 2, wherein
the controller
sets (S109) a second threshold value (L3) that is greater than the first threshold value (L2),
calculates (S211) an override amount indicating a proportion of the occupant's intervention operation during execution of the driving assist control in accordance with a magnitude of the second motor current upon determining the second motor current is greater than the first threshold value and smaller than the second threshold value, and
makes (S207) the override amount larger than when the second motor current is smaller than the second threshold value upon determining the second motor current is greater than the second threshold value.

4. The override determination method for a driving assist device according to any one of claims 1 to 3, wherein
a coefficient for setting the first threshold value (L2) differs depending on a magnitude of the steering angle.

5. The override determination method for a driving assist device according to any one of claims 1 to 4, wherein
the steering wheel and the tires are mechanically separated.

6. A driving assist device comprising:
a sensor that detects a steering angle of a steering wheel (2) installed in a vehicle; and
a controller (10) that determines override by an occupant of the vehicle with respect to driving assist control that is being executed in the vehicle,
**characterized in that**
the controller is configured to
detect a first motor current for canceling out a self-aligning torque generated in tires mounted on the vehicle during execution of the driving assist control,
use the first motor current to thereby set a first threshold value (L2) that is larger than the first motor current and increases as the steering angle detected by the sensor increases, and
determine that the override has occurred when a second motor current for controlling a turning angle of the tires in accordance with the steering angle detected by the sensor is greater than the first threshold value.

## Patentansprüche

1. Übersteuerungsbestimmungsverfahren, das eine Fahrunterstützungsvorrichtung verwendet, die einen Sensor, der einen Lenkwinkel eines in einem Fahrzeug installierten Lenkrads erfasst, und eine Steuerung aufweist, die eine Übersteuerung durch einen Insassen des Fahrzeugs in Bezug auf eine Fahrunterstützungssteuerung bestimmt, die im Fahrzeug ausgeführt wird, **dadurch gekennzeichnet, dass** die Steuerung:
einen ersten Motorstrom zum Aufheben eines Selbstausrichtungsmoments erfasst (S103), das in am Fahrzeug montierten Reifen während der Ausführung der Fahrunterstützungssteuerung erzeugt wird,
den ersten Motorstrom verwendet (S107), um dadurch einen ersten Schwellenwert (L2) einzustellen, der größer als der erste Motorstrom ist und zunimmt, wenn der vom Sensor erfasste Lenkwinkel zunimmt, und
bestimmt (S203 bis S211), dass die Übersteuerung stattgefunden hat, wenn ein zweiter Motorstrom zum Steuern eines Einschlagwinkels der Reifen gemäß dem vom Sensor erfassten Lenkwinkel größer als der erste Schwellenwert ist.

2. Übersteuerungsbestimmungsverfahren für eine Fahrunterstützungsvorrichtung nach Anspruch 1, wobei die Steuerung einen Offset-Betrag eines Stroms addiert (S107), der einem Motor zugeführt wird, der den Einschlagwinkel der Reifen steuert, um dadurch den ersten Schwellenwert (L2) einzustellen, wenn der Lenkwinkel Null ist.

3. Übersteuerungsbestimmungsverfahren für eine Fahrunterstützungsvorrichtung nach Anspruch 1 oder 2, wobei die Steuerung
einen zweiten Schwellenwert (L3) einzustellt (S109), der größer ist als der erste Schwellenwert (L2),
einen Übersteuerungsbetrag berechnet (S211), der einen Anteil der Eingriffsbetätigung des Insassen während der Ausführung der Fahrunterstützungssteuerung gemäß einer Größe des zweiten Motorstroms anzeigt, wenn festgestellt wird, dass der zweite Motorstrom größer als der erste Schwellenwert und kleiner als der zweite Schwellenwert ist, und
den Übersteuerungsbetrag größer macht (S207) als wenn der zweite Motorstrom kleiner als der zweite Schwellenwert ist, wenn festgestellt wird, dass der zweite Motorstrom größer als der zweite Schwellenwert ist.

4. Übersteuerungsbestimmungsverfahren für eine Fahrunterstützungsvorrichtung nach einem der Ansprüche 1 bis 3, wobei
ein Koeffizient zum Einstellen des ersten Schwellenwerts (L2) sich in Abhängigkeit von einer Größe des Lenkwinkels unterscheidet.

5. Übersteuerungsbestimmungsverfahren für eine Fahrassistenzvorrichtung nach einem der Ansprüche 1 bis 4, wobei
das Lenkrad und die Reifen mechanisch getrennt sind.

6. Fahrassistenzvorrichtung, die aufweist:
einen Sensor, der einen Lenkwinkel eines in einem Fahrzeug installierten Lenkrads (2) erfasst; und
eine Steuerung (10), die die Übersteuerung durch einen Insassen des Fahrzeugs in Bezug auf eine
Fahrunterstützungssteuerung bestimmt, die im Fahrzeug ausgeführt wird;
**dadurch gekennzeichnet, dass**
die Steuerung so konfiguriert ist:
einen ersten Motorstrom zu erfassen, um ein Selbstausrichtungsdrehmoment aufzuheben, das in an dem Fahrzeug montierten Reifen während der Ausführung der Fahrunterstützungssteuerung erzeugt wird,
den ersten Motorstrom zu verwenden, um dadurch einen ersten Schwellenwert (L2) einzustellen, der größer als der erste Motorstrom ist und zunimmt, wenn der vom Sensor erfasste Lenkwinkel zunimmt, und
zu bestimmen, dass die Übersteuerung stattgefunden hat, wenn ein zweiter Motorstrom zum Steuern eines Einschlagwinkels der Reifen gemäß dem durch den Sensor erfassten Lenkwinkel größer als der erste Schwellenwert ist.

## Revendications

1. Procédé de détermination de désactivation au moyen d'un dispositif d'assistance à la conduite comprenant un capteur détectant un angle de braquage d'un volant installé dans un véhicule et un contrôleur déterminant une désactivation par un occupant du véhicule relativement à une commande d'assistance à la conduite exécutée dans le véhicule,
**caractérisé en ce que**
le contrôleur
acquiert (S103) un premier courant de moteur pour neutraliser un couple d'auto-alignement généré dans les pneus montés sur le véhicule pendant l'exécution de la commande d'assistance à la conduite,
recourt (S107) au premier courant de moteur pour fixer en conséquence une première valeur seuil (L2) supérieure au premier courant de moteur et augmentant à mesure de la progression de l'angle de braquage détecté par le capteur, et
détermine (S203 to S211) que la désactivation est survenue lorsqu'un deuxième courant de moteur pour la commande d'un angle de braquage des pneus en fonction de l'angle de braquage détecté par le capteur est supérieur à la première valeur seuil.

2. Procédé de détermination de désactivation pour un dispositif d'assistance à la conduite selon la revendication 1, où
le contrôleur ajoute (S107) une valeur de décalage d'un courant d'alimentation d'un moteur commandant l'angle de braquage des pneus pour fixer en conséquence la première valeur seuil (L2) lorsque l'angle de braquage est nul.

3. Procédé de détermination de désactivation pour un dispositif d'assistance à la conduite selon la revendication 1 ou la revendication 2, où
le contrôleur
fixe (S109) une deuxième valeur seuil (L3) supérieure à la première valeur seuil (L2),
calcule (S211) une valeur de désactivation indiquant une proportion de l'opération d'intervention de l'occupant pendant l'exécution de la commande d'assistance à la conduite en fonction d'une amplitude du deuxième courant de moteur, par détermination que le deuxième courant de moteur est supérieur à la première valeur seuil et inférieur à la deuxième valeur seuil, et
rend (S207) la valeur de désactivation plus grande que lorsque le deuxième courant de moteur est inférieur à la deuxième valeur seuil, par détermination que le deuxième courant de moteur est supérieur à la deuxième valeur seuil.

4. Procédé de détermination de désactivation pour un dispositif d'assistance à la conduite selon l'une des revendications 1 à 3, où
un coefficient de fixation de la première valeur seuil (L2) diffère en fonction de l'amplitude de l'angle de braquage.

5. Procédé de détermination de désactivation pour un dispositif d'assistance à la conduite selon l'une des revendications 1 à 4, où
le volant et les pneus sont séparés.

6. Dispositif d'assistance à la conduite, comprenant :
un capteur détectant un angle de braquage d'un volant (2) installé dans un véhicule ; et
un contrôleur (10) déterminant une désactivation par un occupant du véhicule relativement à une commande d'assistance à la conduite exécutée dans le véhicule,
**caractérisé en ce que**
le contrôleur est prévu pour
détecter un premier courant de moteur pour neutraliser un couple d'auto-alignement généré dans les pneus montés sur le véhicule pendant l'exécution de la commande d'assistance à la conduite,
recourir au premier courant de moteur pour fixer en conséquence une première valeur seuil (L2) supérieure au premier courant de moteur et augmentant à mesure de la progression de l'angle de braquage détecté par le capteur, et
déterminer que la désactivation est survenue lorsqu'un deuxième courant de moteur pour la commande d'un angle de braquage des pneus en fonction de l'angle de braquage détecté par le capteur est supérieur à la première valeur seuil.
